# EUROPÄISCHE PATENTSCHRIFT

(11) **EP 2 292 857 B1**
(45) Veröffentlichungstag und Bekanntmachung des Hinweises auf die Patenterteilung: **29.04.2015**
(21) Anmeldenummer: 10012239.9
(22) Anmeldetag: 28.07.2007
(51) Int. Cl.: E04C 1/41, E04B 1/34, A47B 47/00, F16B 12/44, D06F 39/12, E04B 1/88, E04B 1/84, F28D 20/00

(54) **Gebäudewand umfassend mehrere Stabtragwerke umfassend mehrere Knoten und die Knoten verbindende Stäbe**
Wall composed of several lattice trusses composed of multiple nodes and beams connecting the nodes
Mur comprenant plusieurs structures porteuses comprenant plusieurs noeuds et barres reliant des noeuds

(30) Priorität: 08.08.2006 DE 102006036988
(43) Veröffentlichungstag der Anmeldung: 09.03.2011
(62) Teilanmeldung aus: 07801179.8
(73) Patentinhaber: Universität Kassel, 34125 Kassel (DE); Zentrum für Umweltbewusstes Bauen e.V., 34127 Kassel (DE)
(72) Erfinder: Kirsten, Peter Ignaz, 37318 Arenshausen (DE); Klatecki, Marc, 34466 Wolfhagen (DE); Machner, Peter, 34225 Baunatal (DE); Sporleder, Bernd, 37139 Adelebsen (DE); Wolfram, Andreas, 34225 Baunatal (DE); Hoshyargar, Hamid-Reza, 34117 Kassel (DE); Schmidt, Michael, 69120 Heidelberg (DE)
(74) Vertreter: Walther, Walther & Hinz GbR

(56) Entgegenhaltungen:
- EP-A1- 1 036 638
- DE-A1- 3 335 004
- US-A- 3 858 989

## Beschreibung

Die vorliegende Erfindung betrifft eine Gebäudewand umfassend mehrere quaderförmige Stabtragwerke, wobei ein quaderförmiges Stabtragwerk mehrere Knoten und die Knoten verbindende Stäbe aufweist.

Aus der US 3,858,989 A ist ein Stabtragwerk bekannt, aus dem ein Rahmen ausgebildet werden kann. Der Rahmen umfasst mehrere Knoten und die Knoten verbindende Stäbe, wobei jeder Stab mindestens eine in Längsrichtung des Stabes sich erstreckende Auskehlung aufweist, die sich bis in den Knoten fortsetzt. Ein solchermaßen erstellter Rahmen dient der Erstellung von Möbelstücken zur Lagerung von Kleidungsstücken.

Stabtragwerke sind beispielsweise auf dem Gebiet der Fachwerktechnik bekannt. Fachwerke werden üblicherweise aus Holz oder Metall hergestellt. Bekannt sind allerdings auch Tragwerke in der oben beschriebenen Form aus Beton, wobei im Bereich des Knotens die einzelnen Betonträger zusammenlaufen und zur Erhöhung der Festigkeit mit Armierungen versehen sind.

Die Querschnitte derartiger Stabtragwerke sind meistens rechteckig oder quadratisch, im Falle einer Metallkonstruktion eines Fachwerkes sind die Querschnitte der Träger insbesondere als Winkelstreben ausgebildet.

Aus der EP 1 036 638 A1 ist in diesem Zusammenhang die Ausbildung einer Wand mit mehreren quaderförmigen Stabtragwerken gemäß dem Oberbegriff des Anspruches 1 bekannt.

Gegenstand der Erfindung ist eine Gebäudewand, umfassend mehrere quaderförmige Stabtragwerke, wobei ein quaderförmiges Stabtragwerk mehrere Knoten und die Knoten verbindende Stäbe aufweist, wobei erfindungsgemäß jeder Stab mindestens eine in Längsrichtung des Stabes sich erstreckende Auskehlung aufweist, wobei sich die jeweilige Auskehlung bis in den Knoten fortsetzt, wobei das quaderförmige Stabtragwerk durch ein Füllmaterial ausgefüllt ist, das im Vergleich zu dem Material des Stabtragwerkes unterschiedlich ist, und als wärmedämmender und/oder schallisolierender und/oder wärmespeichender Stoff ausgebildet ist.

Im Zuge von Berechnungen hat sich herausgestellt, dass eine Erhöhung der Festigkeit eines Stabtragwerkes zur Bildung eines dreidimensionalen Rahmens dadurch erfolgen werden kann, dass ein solches Stabtragwerk mit Knoten versehen ist, wobei jeder Stab mindestens eine in Längsrichtung des Stabes sich erstreckende Auskehlung aufweist, wobei sich die jeweilige Auskehlung bis in den Knoten fortsetzt. Unter einer Auskehlung wird eine sich in Längsrichtung erstreckende, bogenförmige Ausnehmung verstanden. Wie bereits ausgeführt, konnte durch eine solche Auskehlung erreicht werden, dass die Tragfähigkeit eines Stabtragwerkes der eingangs genannten Art wesentlich erhöht wurde. Insbesondere konnte eine Erhöhung dann festgestellt werden, wenn zwei derartige Auskehlungen jeweils parallel zueinander verlaufend das Stabtragwerk, d. h. auch den einzelnen Stab, bestimmen. Der Vorteil liegt nicht nur in einer gegenüber einem Vollstab mit beispielsweise rechteckigem oder quadratischem Querschnitt erhöhten Stabilität, sondern auch an einer schlankeren und grazileren Bauweise.

Das Stabtragwerk ist quaderförmig ausgebildet. Ein solches Stabtragwerk fungiert dann ähnlich einem Baustein, und zwar insofern, als mit einem solchen quaderförmigen Stabtragwerk auch Gebäude hergestellt werden können, wobei der Hohlraum des quaderförmigen Stabtragwerkes mit einem Füllmaterial ausgefüllt ist, das im Vergleich zu dem Material des Stahltragwerks selbst unterschiedlich ist. In diesem Zusammenhang kann als Füllmaterial ein wärmedämmender und/oder schallisolierender und/oder wärmespeichernder Stoff Verwendung finden. Denkbar ist hierbei insbesondere die Verwendung von Polystyrol oder anderen geschäumten Materialien, um insbesondere eine hohe Wärmedämmung zu erzielen. Die Verwendung derartiger quaderförmiger Stabtragwerke zur Erstellung von Bauten ist insbesondere vor dem Hintergrund interessant, dass durch die offenen Seitenflächen Leitungen für die Hausinstallation geführt werden können. Derartige Öffnungen zum Durchführen derartiger Installationsleitungen bzw. durch Polystyrol als Füllmaterial sind extrem einfach und damit kostengünstig herzustellen, weil hierzu kaum zusätzlicher Arbeitsaufwand erforderlich ist. Dies ganz im Gegensatz zu herkömmlichen Bausteinen, bei denen zur Unterbringung von Installationsleitungen im Wesentlichen immer Kanäle gestemmt werden müssen. Das Füllmaterial selbst muss keine Tragfunktion übernehmen, da insbesondere dann, wenn das Stabtragwerk aus Beton - und hier insbesondere aus hochfestem Beton - hergestellt ist, die Tragfunktion von diesem quaderförmigen Stabtragwerk übernommen wird.

Eine solche Möglichkeit, nämlich die Übernahme der Trägerfunktion, eröffnet sich insbesondere dann, wenn dieses Stabtragwerk aus Beton, insbesondere aus einem Beton, insbesondere einem hochfesten Beton, hergestellt wird, wie er in der DE 103 32 491 A1 beschrieben ist. Grundsätzlich spricht allerdings nichts dagegen, ein solches Stabtragwerk auch aus anderen Materialien, insbesondere aus Stahl oder Kunststoff, in der vorbeschriebenen Form herzustellen. Der Vorteil in der Verwendung von Beton gegenüber Stahl besteht in der heutigen Zeit insbesondere darin, dass Stahl gegenüber Beton wesentlich teurer ist.

Nach einem besonderen Merkmal der Erfindung weist der Knoten mindestens zwei Ansatzelemente zur Aufnahme jeweils eines Stabes auf. Hierdurch ist ein Stabtragwerk quasi nach dem Baukastenprinzip aus vorgefertigten Teilen in nahezu beliebiger Größe herstellbar. Durch die Anordnung eines Ansatzelementes und einer korrespondierenden Ausbildung des Stabendes wird eine in zwei Raumrichtungen formschlüssige Verbindung erreicht, was zum einen der Erhöhung der Passgenauigkeit und zum anderen der Erhöhung der Stabilität dient.

Nach einem weiteren vorteilhaften Merkmal der Erfindung ist vorgesehen, dass das Ansatzelement des Knotens eine Ausklinkung aufweist, wobei der Stab endseitig einen entsprechend der Form der Ausklinkung ausgebildeten Schuh aufweist, wobei der Stab mit dem Ansatzelement im Bereich der Ausklinkung insbesondere stoffschlüssig, z. B. durch Kleben mittels Epoxidharz, verbindbar ist. Die Ausklinkung ist hierbei im Querschnitt nach Art eines ungleichschenkligen Trapezes ausgebildet, wobei die Ausklinkung entsprechend dem Verlauf der parallel zueinander verlaufenden beiden Kehlen, die im Wesentlichen in ihrer flächenmäßigen Erstreckung gleich groß sind, abfallend ausgebildet ist.

Nach einem weiteren Merkmal der Erfindung weisen mehrere parallel zueinander verlaufende Stäbe eine Trennstelle auf, wobei die Stäbe an der Trennstelle durch ein Zwischenglied mit niedriger Wärmeleitfähigkeit verbunden sind. Bei der Herstellung von Gebäuden besteht immer die Problematik, den Wärmetransport zwischen Wandinnen- und Wandaußenseite so gering wie möglich zu halten. Da Beton bekanntermaßen als guter Wärmeleiter gilt, ist nun vorgesehen, die Stäbe des quaderförmigen Stabtragwerkes, die sich quer zur Ebene der Wand erstrecken, zu teilen und im Bereich der Teilung mit einem Zwischenglied aus wärmeisolierendem Material zu versehen, um so eine Wärmebrücke zu vermeiden.

Darüber hinaus ist nach einem weiteren Merkmal vorgesehen, dass das mit Füllmaterial versehene quaderförmige Stabtragwerk auf einer Seite eine Dampfbremse oder Dampfsperre oder eine feuchteadaptive Folie aufweist, um die Wasserdampfdiffusion zu reduzieren bzw. zu vermeiden.

Anhand der Zeichnungen wird die Erfindung nachstehend beispielhaft näher erläutert.
- Figur 1: zeigt den Knoten eines Stabtragwerkes mit drei Ansatzelementen zur Verbindung mit jeweils einem Stab;
- Figur 2: zeigt eine weitere Ansicht auf den Knoten gemäß Figur 1;
- Figur 3: zeigt schematisch ein quaderförmiges Stabtragwerk, dessen Innenraum mit einem Füllmaterial ausgefüllt ist.;
- Figur 3a: zeigt die Verbindung von Stäben durch eine Hülse.

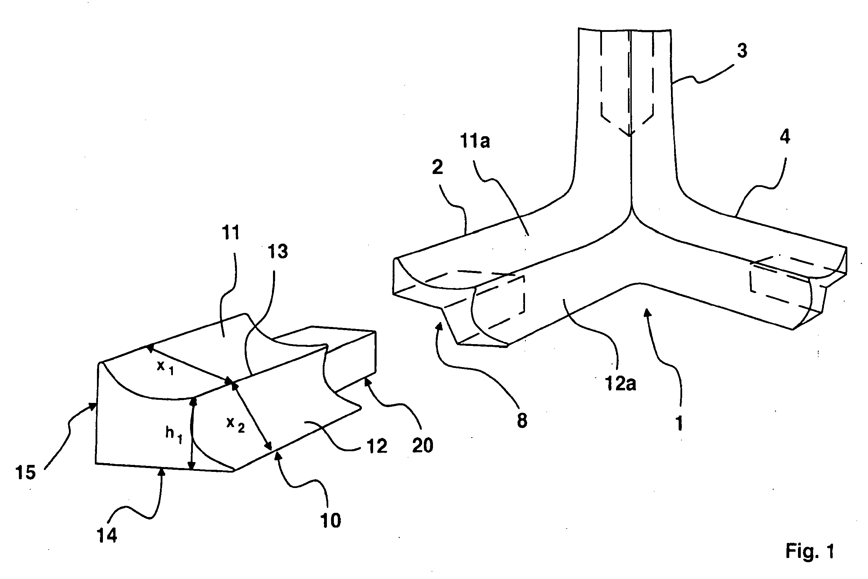

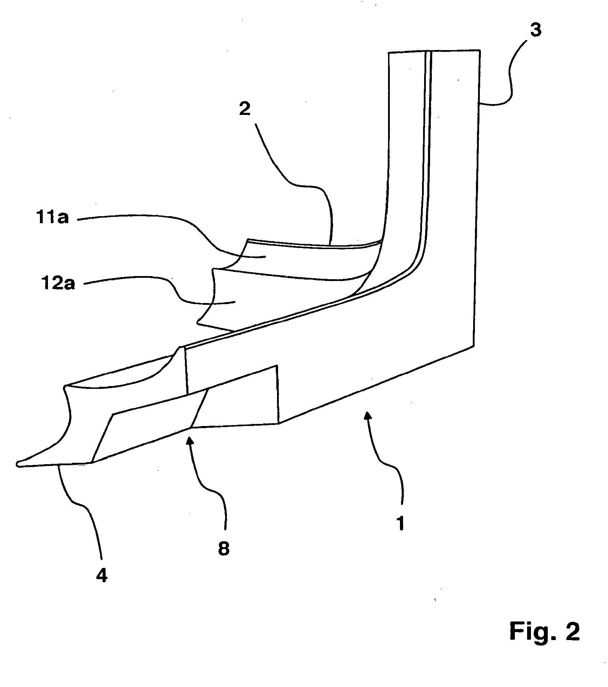

Der in den Figuren 1 und 2 dargestellte Knoten 1 besitzt drei Ansatzelemente 2, 3 und 4, die vom Grundsatz her gleich ausgebildet sind und ineinanderlaufend den Knoten 1 bilden. Die durch den Knoten 1 aufgenommenen Stäbe sind mit 10 bezeichnet. Ein solcher Stab 10 weist zwei parallel zueinander verlaufende Auskehlungen 11 und 12 auf, wobei die Auskehlungen 11 und 12 durch eine Kehllinie 13 miteinander in Verbindung stehen. Die Höhe h₁ der Kehllinie bezogen auf die Flanke 14 beträgt etwa 2/3 der Höhe der Flanke 15. Im Übrigen gilt, dass die Auskehlungen 11 und 12 im Wesentlichen gleich sind. Das bedeutet, dass die Breite x₁ der Auskehlung 11 gleich der Breite x₂ der Auskehlung 12 ist.

Wie sich ebenfalls aus Figur 1 ergibt, besitzt ein solcher Stab einen Schuh 20, dessen Form korrespondierend zu der Ausklinkung 8 in dem Ansatzelement 2 bis 4 des Knotens 1 getroffen ist, d. h. im Querschnitt nach Art eines ungleichschenkligen Trapezes ausgebildet ist. Die Ausbildung des Knotens ist in Bezug auf die Auskehlungen 11 und 12 genauso gehalten wie die des Stabes 10. Wesentlich ist, dass die Auskehlungen 11a und 12a in den Knoten 1, ausgehend von den Ansatzelementen 2, 3 und 4, ineinander laufen, wie sich dies sehr anschaulich aus Figur 1, aber auch aus Figur 2 ergibt.

Die Erhöhung der Stabilität eines in dieser Weise ausgebildeten Stabtragwerkes gegenüber einem Stabtragwerk, das Zusatzelemente und Stäbe mit rechteckigem und quadratischem Querschnitt aufweist, besteht darin, dass durch die Wölbungen auf Grund der Auskehlungen eine Erhöhung der Stabilität ähnlich einem Brückengewölbe oder einem Gebäudegewölbe erzeugt wird. Dies gilt insbesondere für die Gestalt des Knotens, der durch den von den Ansatzelementen eingeschlossenen Bereich nach Art eines Gewölbes ausgebildet ist, wodurch sich die gegenüber einer reinen Rechteckform erhöhte Stabilität ergibt.

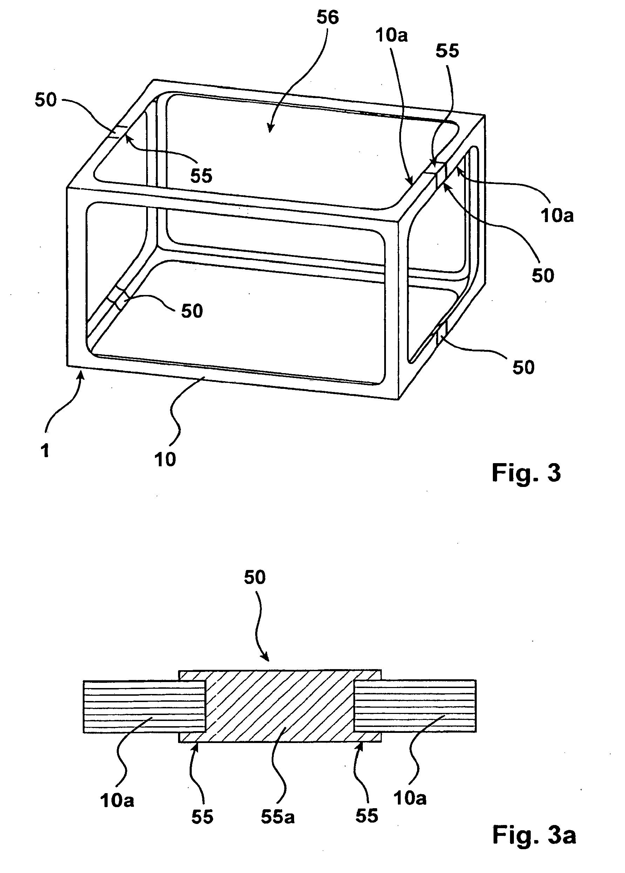

Gegenstand der Erfindung ist ebenfalls ein quaderförmiges Stabtragwerk gemäß Fig. 3. Dieses quaderförmige Stabtragwerk stellt sich im Prinzip als dreidimensionaler Rahmen dar. Der Raum im Inneren des Rahmens ist mit einem Füllmaterial ausgefüllt, z. B. Polystyrol. Stellt man sich vor, dass aus derartigen quaderförmigen Stabtragwerken eine Wand erstellt wird, so erkennt man, dass das aus Knoten 1 und Stäben 10 ausgebildete quaderförmige Stabtragwerk darüber hinaus sich quer zur Fläche erstreckende Stäbe 10a aufweist, die eine Trennstelle 50 aufweisen. Im Bereich dieser Trennstelle sind die Stäbe 10a durch ein Zwischenglied 55 mit niedriger Wärmeleitfähigkeit verbunden. Dieses Zwischenglied mit niedriger Wärmeleitfähigkeit sorgt dafür, dass zwischen der Innen- und der Außenseite der Wand keine Wärmebrücke durch die Stäbe 10 des quaderförmigen Stabtragwerkes gebildet wird. Das Zwischenglied 55 kann hierbei eine Hülse aus einem Stoff mit niedriger Wärmeleitfähigkeit sein, wobei durch dieses hülsenförmige Zwischenstück die Stäbe 10a steckbar aufnehmbar sind. Zur Erhöhung der Stabilität und zur Verminderung der Wärmeleitfähigkeit kann die Hülse etwa mittig einen Puffer 55a aus Vollmaterial aufweisen (Figur 3a).

Im Inneren des quaderförmigen Stabtragwerkes befindet sich der Füllstoff 56, beispielsweise ein Polystyrol. Das quaderförmige Stabtragwerk, dessen Stäbe und Knoten insbesondere aus Beton, und hier insbesondere aus einem hochfesten Beton, hergestellt sind, weist zu allen Seiten Öffnungen auf. Bei der Verwendung solcher quaderförmigen Stabtragwerke zur Herstellung von Gebäuden besteht in einfacher Weise die Möglichkeit der Führung von Installationsleitungen, insbesondere solche für Gas, Wasser, Strom, durch das Innere derartiger quaderförmiger Stabtragwerke durch den Füllstoff hindurch. Da der Füllstoff, vorzugsweise ein Polystyrol, leicht zu bearbeiten ist, ist nunmehr die Durchführung derartiger Versorgungsleitungen relativ einfach und damit auch preiswert.

Nach einem weiteren Merkmal der Erfindung ist vorgesehen, dass auf einer Seite dieses quaderförmigen Stabtragwerkes eine Dampfbremse, eine Dampfsperre oder eine feuchteadaptiven Folie angeordnet ist.

## Patentansprüche

1. Gebäudewand,
umfassend mehrere quaderförmige Stabtragwerke, wobei ein quaderförmiges Stabtragwerk zur Bildung eines Rahmens mehrere Knoten (1) und die Knoten (1) verbindende Stäbe (10) aufweist, wobei das quaderförmige Stabtragwerk (1) durch ein Füllmaterial (56) ausgefüllt ist, das im Vergleich zu dem Material des Stabtragwerkes unterschiedlich ist,
**dadurch gekennzeichnet, dass**
jeder Stab (10) mindestens eine in Längsrichtung des Stabes (10) sich erstreckende Auskehlung (11, 12) aufweist, wobei sich die jeweilige Auskehlung (11, 12) bis in den Knoten (1) fortsetzt, und dass das Füllmaterial (56) im Vergleich zu dem Material des Stabtragwerkes als wärmedämmender und/oder schallisolierender und/oder wärmespeichernder Stoff ausgebildet ist.

2. Gebäudewand nach Anspruch 1,
**dadurch gekennzeichnet,**
**dass** der Knoten (1) mindestens zwei Ansatzelemente (2, 3, 4) zur Aufnahme jeweils eines Stabes (10) aufweist.

3. Gebäudewand nach Anspruch 1 oder 2,
**dadurch gekennzeichnet,**
**dass** der Stab (10) zwei parallel zueinander verlaufende Auskehlungen (11, 12) aufweist, wobei zwischen den beiden Auskehlungen (11, 12) eine mittlere Kehllinie verläuft.

4. Gebäudewand nach Anspruch 3,
**dadurch gekennzeichnet,**
**dass** sich durch die Auskehlung (11, 12) eine Kehllinie (13) ergibt, die eine geringere Höhe (h₁) als die Seitenflanke (15) des Stabes (10) aufweist.

5. Gebäudewand nach Anspruch 4,
**dadurch gekennzeichnet,**
**dass** die Höhe (h₁) der Kehllinie (13) etwa 2/3 der Höhe der Seitenflanke (15) des Stabes (10) beträgt.

6. Gebäudewand nach einem der voranstehenden Ansprüche 2 bis 5,
**dadurch gekennzeichnet,**
**dass** das Ansatzelement (2, 3, 4) des Knotens (1) eine Ausklinkung (8) aufweist, wobei der Stab (10) endseitig einen entsprechend der Form der Ausklinkung (8) ausgebildeten Schuh (20) aufweist, wobei der Schuh (20) mit dem Ansatzelement (2, 3, 4) im Bereich der Ausklinkung (8) insbesondere stoffschlüssig, z. B. durch Kleben, verbindbar ist.

7. Gebäudewand nach Anspruch 6,
**dadurch gekennzeichnet,**
**dass** die Ausklinkung (8) im Querschnitt nach Art eines ungleichschenkligen Trapezes ausgebildet ist.

8. Gebäudewand nach einem der voranstehenden Ansprüche,
**dadurch gekennzeichnet,**
**dass** die Auskehlungen (11, 12) gleich groß sind.

9. Gebäudewand nach einem der voranstehenden Ansprüche,
**dadurch gekennzeichnet,**
**dass** die Stäbe (10) des quaderförmigen Stabtragwerkes, die sich quer zur Ebene der Gebäudewand erstrecken, in Teilstäbe (10a) unterteilt sind, wobei die Teilstäbe (10a) an der Trennstelle durch ein Zwischenglied (55) mit niedriger Wärmeleitfähigkeit verbunden sind.

10. Gebäudewand nach einem der voranstehenden Ansprüche,
**dadurch gekennzeichnet,**
**dass** das mit Füllmaterial versehene quaderförmige Stabtragwerk auf einer Seite eine Dampfbremse oder Dampfsperre oder eine feuchtadaptive Folie aufweist.

## Claims

1. A building wall,
comprising several cuboid bar-type supporting frameworks, wherein one cuboid bar-type supporting framework has several nodes (1) and bars (10) connecting the nodes (1) for forming a frame, wherein the cuboid bar-type supporting framework (1) is filled with a filling material (56) that is different from the material of the bar-type supporting framework,
**characterized in that**
each bar (10) has at least one fillet (11, 12) extending in the longitudinal direction of the bar (10), wherein the respective fillet (11, 12) extends into the node (1),
and that, as compared to the material of the bar-type supporting frame, the filling material (56) is configured as a heat insulating and/or sound insulating and/or heat storing material.

2. The building wall according to claim 1,
**characterized in that**
the node (1) has at least two attachment elements (2, 3, 4) for respectively receiving a bar (10).

3. The building wall according to claim 1 or 2,
**characterized in that**
the bar (10) has two fillets (11, 12) running parallel to each other, wherein a middle fillet line runs between the two fillets (11, 12).

4. The building wall according to claim 3,
**characterized in that**
the fillet (11, 12) results in a fillet line (13), which has a lesser height (h₁) than the side flank (15) of the bar (10).

5. The building wall according to claim 4,
**characterized in that**
the height (h₁) of the fillet line (13) is approximately 2/3 of the height of the side flank (15) of the bar (10).

6. The building wall according to one of the afore-mentioned claims 2 to 5,
**characterized in that**
the attachment element (2, 3, 4) of the node (1) has a notch (8), wherein the bar (10) has a shoe (20) shaped according to the shape of the notch (8), wherein the shoe (20) is connectable, more specifically by way of a material bond connection, e.g. by gluing, to the attachment element (2, 3, 4) in the area of the notch (8).

7. The building wall according to claim 6,
**characterized in that**
the notch (8) has a cross-section configured in the manner of an unequal trapezoid.

8. The building wall according to one of the afore-mentioned claims,
**characterized in that**
the fillets (11, 12) have the same size.

9. The building wall according to one of the afore-mentioned claims,
**characterized in that**
the bars (10) of the cuboid bar-type supporting framework that extend transversely to the plane of the building wall are divided into partial bars (10a), wherein the partial bars (10a) are connected at their joint by an intermediate member (55) with a low heat conductivity.

10. The building wall according to one of the afore-mentioned claims,
**characterized in that**
the cuboid bar-type supporting framework provided with a filling material has a vapour barrier or a vapour seal or a moisture-adaptive film on one side.

## Revendications

1. Paroi de construction comprenant plusieurs assemblages parallélépipédiques porteurs à barres, dans lequel un assemblage parallélépipédique porteur à barres utilisé pour former un cadre comprend plusieurs noeuds (1) et des barres (10) de liaison des noeuds (1), dans lequel l'assemblage parallélépipédique porteur à barres (1) est rempli avec un matériau de remplissage (56), qui est différent en comparaison avec le matériau utilisé pour l'assemblage à barres,
**caractérisée en ce que**,
chaque barre (10) comporte au moins dans la direction longitudinale de la barre (10) une cannelure (11, 12), dans laquelle la cannelure correspondante (11, 12) s'étend jusque dans le noeud (1),
et **en ce que** le matériau de remplissage (56) en comparaison avec le matériau utilisé pour l'assemblage à barres est constitué d'un produit isolant thermique et/ou isolant phonique et/ou de stockage de chaleur.

2. Paroi de construction selon la revendication 1,
**caractérisée en ce que**,
le noeud (1) comporte au moins deux éléments formant des branches (2, 3, 4) destinées à recevoir chacune une barre (10).

3. Paroi de construction selon les revendications 1 ou 2,
**caractérisée en ce que**,
la barre (10) comporte deux cannelures s'étendant parallèlement entre elles (11, 12), dans lequel une cannelure médiane s'étend entre les deux cannelures (11, 12).

4. Paroi de construction selon la revendication 3,
**caractérisée en ce que**,
en raison de l'existence de la cannelure (11, 12), il se forme une ligne de cannelure (13) qui a une hauteur (h₁) inférieure à celle du flanc latéral (15) de la barre (10).

5. Paroi de construction selon la revendication 4,
**caractérisée en ce que**,
la hauteur (h₁) de la ligne de cannelure (13) représente environ les 2/3 de la hauteur du flanc latéral (15) de la barre (10).

6. Paroi de construction selon l'une des revendications précédentes 2 à 5,
**caractérisée en ce que**,
l'élément formant branche (2, 3, 4) du noeud (1) comporte une entaille (8), dans laquelle la barre (10) présente à son extrémité un talon (20) dont la configuration correspond à la forme de l'entaille (8), dans lequel le talon (20) peut être relié à l'élément formant branche (2, 3, 4) dans la zone de l'entaille (8), en particulier par liaison des matériaux, par exemple par collage.

7. Paroi de construction selon la revendication 6,
**caractérisée en ce que**,
l'entaille (8) en section transversale a une configuration similaire à celle d'un trapèze irrégulier.

8. Paroi de construction selon l'une des revendications précédentes,
**caractérisée en ce que**,
les entailles (11, 12) sont de même dimension.

9. Paroi de construction selon l'une des revendications précédentes,
**caractérisée en ce que**,
les barres (10) de l'assemblage parallélépipédique porteur à barres qui sont disposées transversalement par rapport à la surface de la paroi de construction sont divisées en portions de barres (10a), et dans lequel les portions de barres (10a), sont couplées, dans les zones de séparation, par un organe intercalaire (55) ayant une conductivité de la chaleur réduite.

10. Paroi de construction selon l'une des revendications précédentes,
**caractérisée en ce que**,
les assemblages parallélépipédiques porteurs à barres comportant du matériau de remplissage comportent un film pour ralentir la vapeur ou une barrière de vapeur ou un film adaptable au taux d'humidité.
